# EUROPÄISCHE PATENTSCHRIFT

(11) **EP 1 101 832 B1**
(45) Veröffentlichungstag und Bekanntmachung des Hinweises auf die Patenterteilung: **18.04.2007**
(21) Anmeldenummer: 00124345.0
(22) Anmeldetag: 17.11.2000
(51) Int. Cl.: C23C 4/00, B01J 19/00

(54) **Verfahren zur kombinatorischen Herstellung einer Biblithek von Materialien**
Method for the combinatorial production of a library of materials
Procédé de production combinatoire d'une bibliothèque de matériaux

(30) Priorität: 19.11.1999 DE 19955789
(43) Veröffentlichungstag der Anmeldung: 23.05.2001
(73) Patentinhaber: HTE Aktiengesellschaft The High Throughput Experimentation Company, 69123 Heidelberg (DE)
(72) Erfinder: Hibst, Hartmut, Prof. Dr., 69198 Schriesheim (DE); Schunk, Stephan, 69115 Heidelberg (DE); Sterzel, Hans-Josef, Dr., 67125 Dannstadt-Schauernheim (DE)
(74) Vertreter: Ricker, Mathias

(56) Entgegenhaltungen:
- EP-A- 0 139 396
- EP-A- 0 270 265
- WO-A-95/12473
- WO-A-96/11878
- WO-A-98/47613
- GB-A- 1 002 383
- GB-A- 1 410 169
- PATENT ABSTRACTS OF JAPAN vol. 1997, no. 11, 28. November 1997 (1997-11-28) & JP 09 176819 A (MISHIMA KOSAN CO LTD), 8. Juli 1997 (1997-07-08)
- PATENT ABSTRACTS OF JAPAN vol. 011, no. 185 (C-428), 13. Juni 1987 (1987-06-13) & JP 62 010264 A (NOBORU FUJIMURA;OTHERS: 01), 19. Januar 1987 (1987-01-19)

## Beschreibung

Die Erfindung betrifft ein Verfahren zur kombinatorischen Herstellung einer Bibliothek von Materialien in Form einer zweidimensionalen Matrix im Oberflächenbereich eines flächigen Substrats.

Die parallelisierte Herstellung und Testung von Materialien mit geeigneten physikalischen oder chemischen Eigenschaften ist ein Gebiet in der Materialforschung, das gegenwärtig stark an Beachtung gewinnt.

Die WO 98/47613 offenbart eine Reihe von Verfahren, mit denen mittels Sputter-, CVD-oder PVD-Techniken Bibliotheken von potentiell interessanten Materialien erzeugt werden können. Im Kern betrifft diese Anmeldung die Verwendung geeigneter Maskentechniken, die eine definierte Abscheidung von mindestens 2 Komponenten (die als getrennte Substrate vorliegen) auf einem Substrat ermöglicht, wodurch Kompositmaterialien erhalten werden. Weiterhin können durch das Verfahren durch Erzeugung von Gradienten auf dem besputterten Substrat komplette Bibliotheken von Materialien unterschiedlicher Zusammensetzung erzeugt werden.

Die beschriebenen Verfahren weisen eine Reihe von Nachteilen auf. Zum einen werden kontinuierliche kompakte Bibliotheken auf einem Substrat erzeugt, die erst nachträglich durch mechanische Trennung auf gewünschte Eigenschaften separat voneinander getestet werden können. Zum anderen sind die durch diese Substratbeschichtungstechniken hergestellten Probenmengen sehr klein (wenige Milligramm als dünne Schichten auf Substraten), so daß eine definierte Behandlung wie Sinterprozesse oder Behandlung mit bestimmten Medien (Flüssigkeiten, Gase) Schwierigkeiten bereiten, insbesondere bei der Reproduktion von Prozeßparametern oder der Ausskalierung von Probenmengen. Ein weiterer Nachteil des Sputterverfahrens besteht darin, daß die Morphologie der hergestellten Materialien hinsichtlich Kristallinität und Korngröße sich sehr von durch konventionelle, also durch Sprüh-, Fäll- oder Imprägnierungstechniken hergestellte Materialien unterscheiden kann. Damit ist ein Erfolg dieser kombinatorischen Methode unsicher, weil Materialeigenschaften wie z.B. Härte, Ionenleitfähigkeit, Wärmeleitfähigkeit, Dielektrizitätskonstante, elektrische Leitfähigkeit, Thermokraft, magnetische Eigenschaften, Porosität u.a. in hohem Maße von der Kristallinität, der kristallographischen Beschaffenheit der Kristallite bzw. der Feinteiligkeit der Partikel, den Defekten und Korngrenzen und anderen stark von den Herstellparametern beeinflußbaren Parametern abhängen. Eine weitere Problematik bei den beschriebenen Herstelltechniken besteht in der Testung einer nützlichen Eigenschaft des Materials ohne den Einfluß des Substrates, die aufgrund der kleinen Materialmenge und Filmdicke nur schwer möglich ist. Für spezielle Anwendungen, wie elektronische oder magnetische Eigenschaften, ist es von großem Interesse, trägerfreie Substrate zu erzeugen und die so erhaltenen Materialien auf ihre nützlichen Eigenschaften zu testen.

Aufgabe der vorliegenden Erfindung ist die Bereitstellung eines Verfahrens zur kombinatorischen Herstellung einer Bibliothek von Materialien in Form einer zweidimensionalen Matrix im Oberflächenbereich eines flächigen Substrats, das die Nachteile der bekannten Verfahren vermeidet und eine vereinfachte Verfahrensführung zuläßt. Die erhaltenen Materialien sollen möglichst praxisnah hergestellt und untersucht werden, so daß spezielle, durch das kombinatorische Herstellungsverfahren bewirkte Effekte unterdrückt werden.

Die Aufgabe wird erfindungsgemäß gelöst durch ein Verfahren gemäß Anspruch 1 zur kombinatorischen Herstellung einer Bibliothek von Materialien in Form einer zweidimensionalen Matrix im Oberflächenbereich eines flächigen Substrats, bei dem mindestens zwei unterschiedliche sprühfähige Materialkomponenten aus mindestens zwei Sprühdüsen, die vom Substrat und voneinander beabstandet und bevorzugterweise im wesentlichen senkrecht zum flächigen Substrat gerichtet sind, auf dieselbe Seite des Substrats gesprüht werden, so daß in unterschiedlichen Oberflächenbereichen des Substrats Materialien mit unterschiedlicher Zusammensetzung erhalten werden wobei das Substrat während oder nach dem Sprühen thermisch behandelt wird, wobei die Sprühdüsen so angeordnet werden, daß sich die Sprühkegel auf der Substratoberftäche Überlappen, so daß sich Bereichen underschiedlicher Zusammensetzung ergeben.

Dabei ist das flächige Substrat vorzugsweise horizontal angeordnet und wird vertikal von oben besprüht, wobei sich die Sprühdüsen bevorzugt in einer zum flächigen Substrat parallelen Ebene befinden. Die Sprühdüsen sind dabei in der Regel starr angeordnet.

Der Begriff "Bibliothek von Materialien" bedeutet, daß eine Vielzahl unterschiedlich zusammengesetzter Materialien auf einem Substrat erzeugt werden. Vorzugsweise werden mindestens 10, besonders bevorzugt mindestens 100 unterschiedliche Materialien auf dem Substrat gebildet.

Der Ausdruck "im Oberflächenbereich" bedeutet, daß die Materialien beispielsweise auf einem flächigen Substrat gebildet werden, wobei die sprühfähigen Materialkomponenten nicht in das Substrat eindringen. Dies ist beispielsweise bei glatten Keramik- oder Kunststoffsubstraten der Fall, in denen beispielsweise die sprühfähigen Materialkomponenten in Vertiefungen aufgenommen werden.

Es kann sich aber auch um zumindest teilweise poröse Substrate handeln, in die die sprühfähigen Materialkomponenten zumindest teilweise einziehen oder eindringen. Dabei wird erfindungsgemäß das Material in der obersten Schicht des flächigen Substrats gebildet, d.h. im Oberflächenbereich. In diesem Fall beträgt die Eindringtiefe der sprühfähigen Materialkomponenten vorzugsweise maximal 1000 µm, insbesondere maximal 100 µm.

Der Ausdruck "Flächiges Substrat" bedeutet ein Substrat, das sich in zwei Raumrichtungen wesentlich stärker erstreckt als in der dritten Raumrichtung. Das flächige Substrat muß nicht eben sein, es kann sich beispielsweise um eine Reihe von Schälchen oder Vertiefungen auf oder in einer Platte handeln. Beispielsweise kann es sich um eine Tüpfelplatte handeln oder eine entsprechende Platte, die in regelmäßigen Abständen Vertiefungen aufweist. Die genaue Ausgestaltung des flächigen Substrates ist jedoch nicht beschränkt. Es können auch auf andere geeignete Weise einzelne Abschnitte (Matrixelemente) auf dem flächigen Substrat abgetrennt sein.

Der Ausdruck "im wesentlichen senkrecht" bedeutet, daß ausgehend von einem ebenen Substrat oder von einem Substrat mit einer Hauptebene der Sprühstrahl im Mittel senkrecht zu flächigen Substrat gerichtet ist. Beim Versprühen kommt es immer zur Bildung eines Sprühkegels. Dabei sollte die Mittelachse des Sprühkegels im wesentlichen senkrecht auf dem flächigen Substrat stehen. Dabei beträgt die Abweichung zur Senkrechten maximal 10 Grad, vorzugsweise maximal 5 Grad, besonders bevorzugt maximal 2 Grad. In der Regel wird die Ausrichtung des Sprühstrahls nicht geändert, d.h. die Sprühdüse ist starr angeordnet. Die Sprühkegel der einzelnen Sprühdüsen oder die jeweils besprühten Flächen des Substrats überlappen dabei vorzugsweise zumindest teilweise, so daß auf unterschiedliche Bereiche des Substrats unterschiedliche Mengen der Komponenten aufgebracht werden.

Der Ausdruck "unterschiedliche Oberflächenbereiche" beschreibt gerade die unterschiedlichen Positionen auf dem flächigen Substrat, beispielsweise die unterschiedlichen Vertiefungen oder Schälchen, die auf dem Substrat angeordnet sind. Vorzugsweise ist das flächige Substrat in einzelne definierte Plätze unterteilt, die räumlich voneinander abgegrenzt sind.

Das Substrat kann während oder nach dem Sprühen thermisch behandelt werden. In diesem Fall wird eine sogenannte "Spraypyrolyse" durchgeführt, wie sie beispielsweise in US 3,796,793, EP-A-0 011 265 oder DE-A-28 02 814 beschrieben ist. Für besondere Ausgestaltungen der Spraypyrolyse kann auf diese Schriften verwiesen werden. Die in der Literatur beschriebenen Verfahren zur Erzeugung von multimetalloxidhaltigen und keramischen Composits durch Spraypyrolyse beschreiben jedoch die Erzeugung möglichst homogener Zusammensetzungen und nicht die Erzeugung von Gradienten entlang der Substratoberfläche, wie erfindungsgemäß bevorzugt.

Gegenüber den bekannten Verfahren erlaubt das erfindungsgemäße Verfahren eine wesentlich vereinfachte Herstellung von Materialbibliotheken, beispielsweise entfällt die Nutzung von Masken bei der Spraypyrolyse zur Erzeugung der gewünschten Bibliotheken.

Die Erfindung betrifft zudem ein Verfahren zur kombinatorischen Testung der so erhaltenen Bibliotheken von Materialien, bei dem einzelne definierte Plätze des Substrats mit physikalischen und/oder chemischen Verfahren auf eine gewünschte Eigenschaft untersucht werden und sodann die Zusammensetzung der definierten Plätze des Substrats, für die die gewünschte Eigenschaft gefunden wurde, analysiert wird.

Die grundsätzliche Idee des erfindungsgemäßen Spraypyrolyse-Verfahrens unter Benutzung von zwei oder mehreren Medienquellen besteht darin, daß mittels zweier oder mehrerer Sprüh- oder Zerstäubungsdüsen unterschiedliche Materialkomponenten bzw. Medien (etwa Metallsalzlösungen oder Dispersionen von oxidischen oder metallischen Kolloiden) auf ein Substrat mit definierten Probenplätzen gesprüht werden, wobei zunächst durch den Sprühprozeß auf dem Substrat eine Matrix mit unbekannter Zusammensetzung erzeugt wird. Durch die Aufteilung des Substrats in einzelne definierte Plätze werden Einzelproben erhalten, die gesondert auf ihre nützlichen Eigenschaften getestet werden können. Erst nach erfolgter erfolgreicher Testung auf die erwünschte physikalische oder chemische Eigenschaft erfolgt eine Analyse der Zusammensetzung der die Anforderungen erfüllenden Materialien. Dabei wird bei der Herstellung der Bibliotheken auf den Substraten so vorgegangen, daß durch zwei oder mehrere, z.B. bis 10, insbesondere 3 bis 5, Zerstäubungsdüsen, die alle unterschiedliche Komponenten enthalten können, auf ein Substrat mit definierten Plätzen (wie Schälchen, Vertiefungen, Matrixelemente) gesprüht wird.

Durch die Wahl der Düsenform ergibt sich die überlappende Verteilung der unterschiedlichen Komponenten auf dem Substrat und damit die Zusammensetzung der unterschiedlichen Proben. Die unterschiedlichen intergralen Zusammensetzungen auf den definierten Substratplätzen ergeben sich hierbei aus den unterschiedlichen Benetzungen und Ablagerungen durch die unterschiedlichen Komponenten, die durch den Düsenkegel und die Düsenform gesteuert werden kann. In einer alternativen Variante können die Komponenten in zeitlicher Abfolge auf das Substrat aufgebracht werden und so Materialien mit einer bestimmten Schichtabfolge von Komponenten erzeugt werden. Solche Materialien sind beispielsweise für Anwendungen in der Sensorik oder in der Elektronik von Interesse.

Bei dem erfindungsgemäßen Verfahren erfolgt das Sprühen bevorzugt in vertikaler Richtung von oben. So entfällt eine Befestigung von räumlich voneinander getrennten Einzelsubstraten (beispielsweise Schälchen, Plättchen, Röhrchen auf dem Substrat. Vorzugsweise sind die sprühfähigen Materialkomponenten ausgewählt aus Lösungen, Emulsionen, Suspensionen und Pulvern von Elementen der Gruppen IB, IIB, IIIB, IVB, VB, VIB, VIIB und VIII, Lanthanoiden, Actinoiden, IA, IIA, IIIA, IVA, VA und VIA des Periodensystems der Elemente oder deren Verbindungen oder Gemischen davon. Versprüht werden bei dem Verfahren als Komponenten vorzugsweise Metallsalzlösungen, -dispersionen, -suspensionen und/oder -pulver. Unter Pulver sind sowohl Metallpulver wie auch Oxide, Carbide oder Nitride zu verstehen. Dabei können die Lösungsmittel zum Beispiel Wasser, Paraffine oder Gemische von Lösungsmitteln mit geeigneten Dispergatoren wie etwa organischen Additiven sein. Paraffine finden insbesondere dann Anwendung, wenn luft- oder wasserempfindliche Substanzen versprüht werden. Werden Dispersionen/Suspensionen versprüht, so sollten die Partikel, die in der Dispersion/Suspension enthalten sind, vorzugsweise kleiner als 10 Mikrometer, besonders bevorzugt kleiner als 50 Mikrometer sein, um eine Verstopfung der Düsen zu vermeiden.

Besonders homogene Schichten mit unterschiedlichen Zusammensetzungen werden durch das erfindungsgemäße Sprühpyrolyseverfahren erhalten, wenn die einzelnen zu zerstäubenden Medien in besonders feinteilige Tröpfchen zerstäubt werden. Dies ist beispielsweise durch Zerstäubung mittels Ultraschall möglich (Ultraschallanregung).

Für das erfindungsgemäße Verfahren ist es vorteilhaft, feinteilige Pulver in stabile Dispersionen oder Suspensionen zu überführen. Um möglichst wenig Dispergiermittel verdampfen zu müssen, sollten möglichst hohe Volumenanteile von Feststoff bei gleichzeitig niedriger Viskosität der zu versprühenden Dispersionen oder Suspensionen eingesetzt werden. Volumengehalte von vorzugsweise 20 bis 50 Vol.-%, besonders bevorzugt 30 bis 40 Vol.-% werden beim Einsatz geeigneter Dispergatoren erhalten.

Da sich die Anforderungen an Dispergatoren durch die große Zahl verschiedener Pulver und möglicher Dispergiermedien stark unterscheiden, sind unwirtschaftliche Einzellösungen für Dispergierprobleme, d.h. ein bestimmter Dispergator für eine spezielle Kombination von Pulver und Dispergiermedium, weit verbreitet.

Dagegen weisen Dispergatoren der Formel I

(R¹)ₓ-A-[(B-O)ₙ-Z]_{y} (I)

ein sehr breites Wirkungsspektrum auf.

Im einzelnen haben die Variablen und Gruppierungen folgende Bedeutung:
- A: Sauerstoff oder eine -CO-O- Gruppe, vorzugsweise Sauerstoff, wenn x und y für 1 stehen; weiterhin Stickstoff, wenn x + y = 3 ist,
- B: Ethyliden oder 1,2-Propyliden, vorzugsweise Ethyliden,

- Z: eine der Gruppen 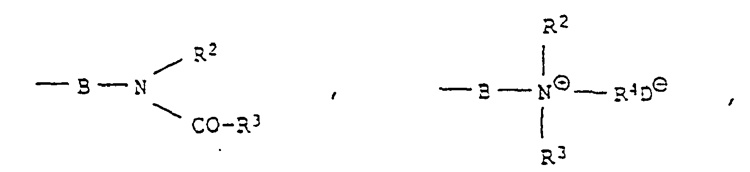 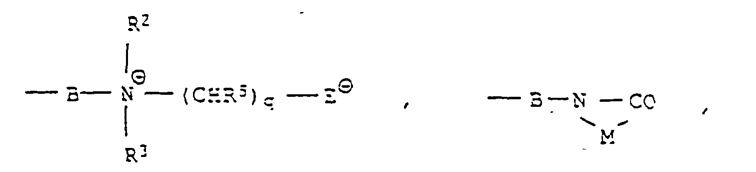 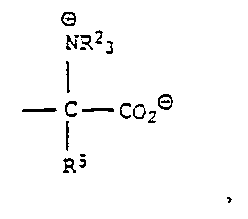 wobei folgende Gruppen bevorzugt sind:

-CH₂CH₂N⁺R²R³-CH₂-CO₂-,
- D⁻: Acetat, Formiat, Propionat oder Hydroxyd, vorzugsweise Acetat,
- E⁻: Carboxylat oder Sulfonat, vorzugsweise Carboxylat,
- M: eine Brückengruppierung zur Vervollständigung eines Pyrrolidon-, - oder Succinimid- oder Maleinimidrings als Gruppierung 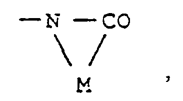
- n: 1 bis 50, vorzugsweise 2 bis 25,
- q: 1 bis 4, vorzugsweise 1,
- x, y: 1 oder 2 mit der Maßgabe, daß x+y ≤ 3 ist,
- R¹: (C₈-C₃₀)- Alkylgruppe oder wenn A = 0 (C₄-C₁₂)-alkylsubstituierter Phenylrest, vorzugsweise (C₁₂-C₁₈)-Alkylgruppe, darunter besonders Gemische aus (C₁₃/C₁₅)-Oxoalkoholresten sowie (C₁₂/C₁₄)- und (C₁₆/C₁₈)-Fettalkoholresten; im Fall, daß A für Sauerstoff steht, vorzugsweise tert.-Butyl-, iso-Octyl- und iso-Nonylphenyl,
- R², R³, R⁴: Wasserstoff, Methyl oder Ethyl, vorzugsweise Wasserstoff oder Methyl,
- R⁵: Wasserstoff, Methyl.

Bei den Verbindungen (I) handelt es sich um Alkylenoxid- oder Polyalkylenoxidderivate mit Resten (R¹)ₓ-A- und-Z als terminierende Gruppen.

Die Dispergatoren der allgemeinen Formel (I) finden erfindungsgemäß Verwendung zur Dispergierung feinteiliger Feststoffe in einem fließfähigen Medium (Dispergiermittel).

Derartige Feststoffe sind bevorzugt oxidische oder nichtoxidische anorganische Pulver und Metallpulver.

Feinteilig bedeutet, daß die mittleren Korngrößen im allgemeinen 0,1 bis 10 µm betragen.

Fließfähige Medien, (Dispergiermittel) umfassen Flüssigkeiten, die bei Raumtemperatur flüssig sind, wie Wasser oder organische Lösungsmittel wie Alkohole, Ether, Etheralkohole, Ester, aliphatische und aromatische Kohlenwasserstoffe, halogenierte Kohlenwasserstoffe, Amine, Amide und Nitroverbindungen. Es können auch Mischungen dieser Stoffe verwendet werden.

Aus den oben genannten feinteiligen Feststoffen, den fließfähigen Medien sowie Verbindungen der Formel (I) sind erfindungsgemäß zu applizierende Zubereitungen erhältlich.

Die Herstellung der erfindungsgemäß eingesetzten Zubereitungen erfolgt in an sich bekannter Weise. So hat es sich besonders bewährt, im kleinen Maßstab die Dispergierung mit Ultraschallwellen vorzunehmen, indem Dispergiermedium und Dispergator in einem Ultraschallbad mit dem Feststoff versetzt werden.

Für größere Ansätze wird man zweckmäßigerweise auf die Vermahlung, z.B. in einer Schwingmühle oder Kugelmühle, zurückgreifen.

Im Sinne der Erfindung als hoch effektive Dispergatoren zur Herstellung von Zubereitungen stabiler, hochkonzentrierter und niedrigviskoser Sprühmedien sind auch Dispergatoren der folgenden Formeln gut geeignet: 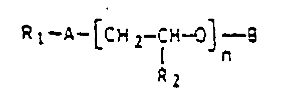 oder 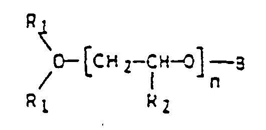 oder 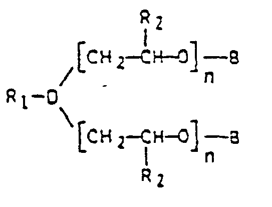 in denen R₁ ein aliphatischer Kohlenwasserstoffrest mit 10 bis 40 C-Atomen, A die Gruppierung -O- oder

-C(O)-O-,

R₂ an unterschiedlichen Positionen unabhängig voneinander -H, -CH₃ oder -CH₂-CH₃, B die Gruppierung -HSO₃, -H₂PO₄,

-(CH2)ₓ-C(O)-OZ,

-(CH₂)-NH₂, -NH-(CH₂)ₓ-NH₂ oder

-(CH₂)ₓ-C(O)-NY₂,

in der Z für Wasserstoff, Alkalimetall oder Ammonium,
x für eine ganze Zahl von 1 bis 3 und y für H oder -CH₃ steht,
D die Gruppierung >N- oder

>N-C(O)-(CH₂)ₓ-,

in der x ebenfalls die obige Bedeutung hat und n eine ganze Zahl von 1 bis 40 ist, bedeutet.

Vorzugsweise werden von den Dispergiermitteln 0,1 bis 10 Gew.-%, besonders bevorzugt 0,5 bis 5 Gew.-%, bezogen auf den Feststoff eingesetzt.

Die durch das Sprühen aus zwei oder mehreren Düsen erhaltenen Schichten mit unterschiedlichen Zusammensetzungen werden einer thermischen Behandlung ausgesetzt. Diese kann sowohl während des Sprühprozesses als auch danach erfolgen. Erfolgt die thermische Behandlung während des Sprühprozesses, so erfolgt die Ablagerung der zerstäubten Materialien auf ungeheizte oder aufgeheizte Substrate (T=0-1500°C, ungeheizt bevorzugt 0 bis 40 °C, geheizt bevorzugt 150-800 °C).

Erfolgt die thermische Behandlung nach der Zerstäubung der einzelnen Medien, so kann über die Zeit, in der sich die versprühten Rohmassen bis zu einer nachfolgenden thermischen Behandlung absetzen können, die Porosität der entstehenden Festkörper gesteuert werden. Tendenziell wird ein längeres Absetzen eher dichte Massen ohne Poren erzeugen, während poröse Körper durch direkt nachfolgende thermische Behandlung erzielt werden können.

Der stoffliche Gradient der Materialkomponenten parallel zur Substratoberfläche ist nützlich, um Legierungen oder Verbindungen von Metallen und/oder Nichtmetallen, gemischte Oxide von Metallen und/oder Nichtmetallen oder andere Verbindungsklassen unterschiedlicher Zusammensetzungen herzustellen, die mittels spraypyrolytischen Verfahren zugänglich sind. Durch geeignete räumliche Anordnung der definierten Plätze auf dem Substrat kann die besprühte Matrix in Sektoren aufgeteilt werden, in denen, nach Art der "Stochastik", es zu einer Anreicherung jeweils einer der Komponenten kommt, so daß ein möglichst großer Bereich der potentiell herstellbaren Komponentenmischungen erzeugt werden kann. Vorzugsweise werden die Sprühdüsen in einer Ebene parallel zur Substratoberfläche angeordnet, so daß sie jeweils den gleichen Abstand zum Substrat haben. Dabei sind die Sprühdüsen so angeordnet, daß sich die Sprühkegel auf der Substratoberfläche überlappen, so daß sich Bereiche unterschiedlicher Zusammensetzung ergeben. Beispielsweise können drei Sprühdüsen in den Ecken eines gleichseitigen Dreiecks angeordnet sein, und die Sprühkegel so eingestellt werden, daß jeweils Bereiche auf dem Substrat erhalten werden, in denen nur eine Materialkomponente, zwei der Materialkomponenten bzw. drei Materialkomponenten vorliegen. Dies bedeutet, daß die Sprühkegel bzw. die auf dem Substrat erhaltenen kreisförmigen Sprühflächen sowohl in der Zweierkombination als auch in der Dreierkombination überlappen. Für die jeweilige Zusammensetzung spielen dabei sowohl die räumliche Düsenanordnung, als auch die Anordnung der definierten Substratplätze eine Rolle. Wie bereits oben beschrieben, kann auch über die zeitliche Abfolge des Besprühens mit unterschiedlichen Komponenten eine weitere Variable bei der Zusammensetzung eingeführt werden.

Als Matrices oder Substrate eignen sich im Hinblick auf Materialien, die potentiell als Aktivkomponenten in der heterogenen Katalyse Anwendungspotential haben sollen, solche Materialien, die in DE-A-198 05 719 aufgeführt sind. Solche Materialien sind im wesentlichen Trägermaterialien (insbesondere Formkörper, zum Beispiel Röhrchen), die eine Porosität aufweisen wie im wesentlichen Keramiken (Oxide, Nitride, Carbide) wie Glaskeramik oder Sinterquarz, Metalle und Aktivkohlen. Auch glatte oder dichtgesinterte Materialien wie Glas können Einsatz finden. Solche Formkörper können ebenfalls durch geeignete Anordnung von innen oder außen mit den potentiellen Aktivmassen beschichtet werden, zum Beispiel durch Auftrennen von Röhrchen in zwei Hälften, die für einen nachfolgenden katalytischen Test wieder zusammengefügt und dann z.B. wie in DE-A-198 05 719 beschrieben als potentielle Aktivmasse in einem Rohrreaktor eingesetzt werden können.

Potentielle Komponenten, die als Aktivmassc interessant sein können, sind zum Beispiel Metalle der Gruppen IB, IIB, IIIB, IVB, VB, VIB, VIIB und VIII, sowie Lanthanoiden und Actinoiden, sowie Metalle und Nichtmetalle der Gruppen IA, IIA, IIIA, IVA, VA und VIA.

Als weitere nützliche Eigenschaften so hergestellter Materialien kommen Eigenschaften wie Supraleitfähigkeit, Sauerstoffionenleitfähigkeit bei erniedrigten Temperaturen kleiner als 900 °C oder hoher Seebeckkoeffizient in Frage.

Hier sind insbesondere solche Materialien interessant, die Halbleitereigenschaften aufweisen und neben hohen Seebeckkoeffizienten hohe elektrische Leitfähigkeiten und gleichzeitig niedrige Wärmeleitfähigkeiten aufweisen.

Gemäß der vorstehend beschriebenen Ausführungsform wird das flächige Substrat während des Sprühens nicht bewegt. Dabei ist das flächige Substrat vorzugsweise in einzelne definierte Plätze unterteilt, die voneinander abgegrenzt sind.

Es ist auch möglich, das flächige Substrat während des Sprühens in mindestens eine Richtung innerhalb der Flächenebene zu verschieben. Dabei liegt das flächige Substrat vorzugsweise in Form eines flächigen flexiblen Bandes vor, das in Längsrichtung durch eine von den Sprühdüsen gebildete Sprühzone bewegt wird. Beispielsweise kann das Band von einer Rolle oder Walze abgewickelt, durch die Sprühzone geführt und auf eine weitere Walze oder Rolle aufgewickelt werden. Die in der Sprühzone, beispielsweise in Bandrichtung hintereinander angeordneten Sprühdüsen können dabei phasenmoduliert betrieben werden. Dabei können beispielsweise auch alle Düsen auf den gleichen Abschnitt des Bandes gerichtet sein. Sowohl durch Steuerung der Vorschubgeschwindigkeit des Bandes als auch zeitlich modulierende Ansteuerung der einzelnen Sprühdüsen ergeben sich variierende Zusammensetzungen auf dem Band.

Beschichtungsverfahren, bei denen kontinuierliche Verfahren genutzt werden, wie etwa die Beschichtung von Bändern mittels Verfahren des Bandes in eine Richtung unter gleichzeitiger Beschichtung mittels Spraypyrolyse, eignen sich somit ebenfalls für die Herstellung von Materialbibliotheken. Dadurch, daß die versprühte Menge der zu zerstäubenden Komponenten, die sich auf dem mit konstanter Geschwindigkeit laufenden Band ablagert, als Funktion der Zeit für die einzelnen Komponenten phasenverschoben variiert wird (phasenmodulierte Düsensteuerung), besitzt das resultierende Band auf seiner ganzen Länge unterschiedliche Zusammensetzungen, und es kann in den einzelnen Abschnitten auf nützliche Eigenschaften getestet werden. Geeignete Bandmaterialien sind Metallbänder, -netze, -gewebe, -gestricke oder -filze, die für die Testung auf nützliche, wie z.B. katalytische Eigenschaften in Stücke geschnitten und anschließend zu Röhren verarbeitet werden können, um dann z.B. entsprechend DE-A-198 05 719 untersucht zu werden. Prinzipiell ist man nicht auf Metalle als Träger beschränkt, auch Formkörper aus Keramik oder Aktivkohle können so mit potentiellen Aktivmassen beschichtet werden.

## Patentansprüche

1. Verfahren zur kombinatorischen Herstellung einer Bibliothek von Materialien in Form einer zweidimensionalen Matrix im Oberflächenbereich eines flächigen Substrats, bei dem mindestens zwei unterschiedliche sprühfähige Materialkomponenten aus mindestens zwei Sprühdüsen, die vom Substrat und voneinander beabstandet sind, auf dieselbe Seite des Substrats gesprüht werden, so dass in unterschiedlichen Oberflächenbereichen des Substrats Materialien mit unterschiedlicher Zusammensetzung erhalten werden, wobei das Substrat während oder nach dem Sprühen thermisch behandelt und somit eine Spraypyrolyse durchgeführt wird wobei die Sprühdüsen so angeordnet werden, dass sich die Sprühkegel auf der Substratoberfläche überlappen, so dass sich Bereiche unterschiedlicher Zusammensetzung ergeben.

2. Verfahren nach Anspruch 1, **dadurch gekennzeichnet, dass** das flächige Substrat horizontal angeordnet ist und vertikal von oben besprüht wird, wobei sich die Sprühdüsen in einer zum flächigen Substrat parallelen Ebene befinden und im Wesentlichen senkrecht zum flächigen Substrat ausgerichtet sind.

3. Verfahren nach Anspruch 1, **dadurch gekennzeichnet, dass** die sprühfähigen Materialkomponenten ausgewählt sind aus Lösungen, Emulsionen, Suspensionen oder Pulvern von Elementen der Gruppen IB, IIB, IIIB, IVB, VB, VIB, VIIB oder VIII, Lanthanoiden, Actinoiden, IA, IIA, IIIA, IVA, VA, VIA des Periodensystems der Elemente oder deren Verbindungen oder Gemischen davon.

4. Verfahren nach einem der Ansprüche 1 bis 3, **dadurch gekennzeichnet, dass** das Sprühen durch Ultraschallanregung erfolgt.

5. Verfahren nach einem der Ansprüche 1 bis 4, **dadurch gekennzeichnet, dass** das flächige Substrat während des Sprühens nicht bewegt wird.

6. Verfahren nach einem der Ansprüche 1 bis 4, **dadurch gekennzeichnet, dass** das flächige Substrat während des Sprühens in mindestens eine Richtung innerhalb der Flächenebene verschoben wird.

7. Verfahren nach Anspruch 6, **dadurch gekennzeichnet, dass** das flächige Substrat in Form eines flächigen flexiblen Bandes vorliegt, das in Längsrichtung durch eine von den Sprühdüsen gebildete Sprühzone bewegt wird.

## Claims

1. Process for the combinatorial production of a material library in the form of a two-dimensional matrix in the surface region of a planar substrate in which at least two different sprayable material components are sprayed onto the same side of the substrate from at least two spray nozzles which are at a distance from the substrate and from one another so that materials of different compositions are produced in different surface regions of the substrate, wherein the substrate is thermally treated during or after the spraying and a spray pyrolysis is thus carried out, wherein the spray nozzles are disposed in such a way that the spray cones over lap on the substrate surface so that regions of different compositions are produced.

2. Process according to Claim 1, **characterized in that** the planar substrate is arranged horizontally and is sprayed vertically from above, the spray nozzles being situated in a plane parallel to the planar substrate and being essentially oriented perpendicularly to the planar substrate.

3. Process according to Claim 1, **characterized in that** the sprayable material components are selected from solutions, emulsions, suspensions or powders of elements of groups IB, IIB, IIIB, IVB, VB, VIB VIIB or VIII, lanthanides, actinides, IA, IIA, IIIA, IVA, VA, VIA of the Periodic Table of the Elements or their compounds or mixtures thereof.

4. Process according to one of Claims 1 to 3, **characterized in that** the spraying is performed by ultrasonic excitation.

5. Process according to one of Claims 1 to 4, **characterized in that** the planar substrate is not moved during the spraying.

6. Process according to one of Claims 1 to 4, **characterized in that** the planar substrate is shifted during the spraying in at least one direction within the surface plane.

7. Process according to Claim 6, **characterized in that** the planar substrate is present in the form of a planar flexible strip which is moved in the longitudinal direction through a spray zone formed by the spray nozzles.

## Revendications

1. Procédé pour la création combinatoire d'une bibliothèque de matériaux sous la forme d'une matrice bidimensionnelle dans la zone superficielle d'un substrat plat, dans lequel au moins deux différents composants de matériau pulvérisables sont pulvérisés sur la même face du substrat depuis aux moins deux pulvérisateurs situés à distance du substrat et de l'un de l'autre, de sorte que des matériaux avec une composition différente soient obtenus dans différentes régions superficielles du substrat, de sorte que le substrat est traité thermiquement pendant ou après la pulvérisation et une pyrolyse par projection est ainsi réalisée, de sorte que les pulvérisateurs sont disposés de telle sorte que les cônes de pulvérisation débordent sur la surface du substrat, de sorte que des régions de composition différente soient obtenues.

2. Procédé selon la revendication 1, **caractérisé en ce que** le substrat plat est disposé horizontalement et pulvérisé verticalement depuis le haut, de sorte que les pulvérisateurs se trouvent sur un plan parallèle au substrat plat et sont essentiellement orientés à la verticale du substrat plat.

3. Procédé selon la revendication 1, **caractérisé en ce que** les composants de matériau pulvérisables sont choisis parmi des solutions, émulsions, suspensions ou poudres d'éléments des groupes IB, IIB, IIIB, IVB, VB, VIB, VIIB ou VIII, lanthanides, actinides, IA, IIA, IIIA, IVA, VA, VIA de la classification périodique des éléments ou leurs composés ou des mélanges de ceux-ci.

4. Procédé selon l'une des revendications 1 à 3, **caractérisé en ce que** la pulvérisation intervient par excitation ultrasonore.

5. Procédé selon l'une des revendications 1 à 4, **caractérisé en ce que** le substrat plat n'est pas déplacé pendant la pulvérisation.

6. Procédé selon l'une des revendications 1 à 4, **caractérisé en ce que** le substrat plat est décalé dans au moins une direction dans le plan de surface.

7. Procédé selon la revendication 6, **caractérisé en ce que** le substrat plat se présente sous la forme d'une bande plate flexible, qui est déplacée dans le sens longitudinal à travers une zone de pulvérisation formée par les pulvérisateurs.
